# FASCICULE DE BREVET EUROPEEN

(11) **EP 3 568 965 B1**
(45) Date de publication et mention de la délivrance du brevet: **05.04.2023**
(21) Numéro de dépôt: 18700110.2
(22) Date de dépôt: 08.01.2018
(51) Int. Cl.: H04L 9/40, H04W 4/02, H04W 12/06, G06F 21/34, G06F 21/42

(54) **PROCÉDÉ D'AUTHENTIFICATION EN DEUX ÉTAPES, DISPOSITIF ET PROGRAMME D'ORDINATEUR CORRESPONDANT**
ZWEISTUFIGES AUTHENTIFIZIERUNGSVERFAHREN, VORRICHTUNG UND ZUGEHÖRIGES COMPUTERPROGRAMM
TWO-STEP AUTHENTICATION METHOD, DEVICE AND CORRESPONDING COMPUTER PROGRAM

(30) Priorité: 13.01.2017 FR 1750295
(43) Date de publication de la demande: 20.11.2019
(73) Titulaire: CMX Security, 91470 Les Molières (FR)
(72) Inventeur: BORNECQUE, Cédric, 91470 Les Molières (FR)
(74) Mandataire: Vidon Brevets & Stratégie
(86) Numéro de dépôt international: PCT/EP2018/050332
(87) Numéro de publication internationale: WO 2018/130486

(56) Documents cités:
- US-A1- 2013 167 208
- US-A1- 2013 185 210
- US-A1- 2014 317 713

## Description

### 1. Domaine

La présente technique se rapporte à l'authentification d'utilisateurs auprès de dispositifs de fourniture de services en ligne. La présente technique se rapporte plus particulièrement à l'authentification d'utilisateurs qui souhaitent avoir accès à un espace utilisateur en ligne par l'intermédiaire d'un serveur. Plus spécifiquement encore, il est présenté une technique d'accès à un service en ligne comprenant une double authentification.

### 2. Art Antérieur

Lorsqu'un utilisateur d'un service en ligne souhaite accéder à un espace personnel ou à un compte qui lui est propre, il est très fréquent qu'un identifiant et un mot de passe soient requis. L'utilisateur doit alors saisir l'identifiant et le mot de passe qu'il a généralement choisis afin de pouvoir accéder à ce compte ou à cet espace personnel. L'accès au service en ligne tout comme la saisie des couples identifiant/mot de passe est généralement effectué à partir d'un terminal de communication (de type ordinateur, tablette, téléphone) qui est connecté à un réseau de communication. Le terminal de communication, d'une manière générale, exécute une application, qui établit une ou plusieurs connexions, au travers du réseau de communication, vers un serveur (dispositif électronique) qui se charge de vérifier l'authenticité des données saisies par l'utilisateur et d'autoriser (ou non) l'accès au service en ligne, au compte ou à l'espace personnel. Le couple identifiant/mot de passe est utilisé par le serveur pour déterminer qui est l'utilisateur (identifiant) et vérifier s'il possède des données requises (mot de passe).

Il est connu que cette manière de procéder n'est finalement pas très sécurisée. Cette relative faiblesse de ce type de système tient à plusieurs facteurs. On peut citer notamment le fait que les mots de passe employés par les utilisateurs sont souvent de faible résistance. On peut également citer le fait que les systèmes auprès desquels il est nécessaire de se connecter comportent des failles de sécurité plus ou moins importantes (absence de résistance au SQL injection par exemple ou faible résistance à la redirection, absence de chiffrement, etc.). Des efforts importants ont été réalisés pour rendre les systèmes plus résistants, notamment par exemple en généralisant des mécanismes de pistage dont l'objectif est de disposer d'information supplémentaires sur la personne qui tente de se connecter à un service en ligne (par exemple récupération de l'adresse IP du terminal de communication à partir de duquel l'utilisateur se connecte). Un système intéressant, bien que non largement répandu, consiste à faire saisir à l'utilisateur, des données à usage unique.

Le principe est le suivant :
- à l'aide d'un premier terminal, l'utilisateur saisit son identifiant, et le valide ;
- à réception de la saisie de cet identifiant, le serveur génère une donnée à usage unique qu'il transmet à l'utilisateur sur un deuxième terminal (différent du premier terminal avec lequel l'utilisateur tente de se connecter) ;
- l'utilisateur consulte ce deuxième terminal et saisie la donnée à usage unique (conjointement ou non avec son mot de passe) sur le premier terminal et valide cette saisie ;
- le serveur réceptionne les données en provenance du premier terminal et vérifie d'une part que le mot de passe coïncide avec celui enregistré en base et d'autre part que les données à usage unique correspondent à celles qu'il a précédemment transmises.

Le niveau de sécurité offert par ce type de système est effectivement bien plus élevé que le simple couple identifiant/mot de passe. Cependant, ce type de système pose lui aussi des problèmes. Le premier problème réside dans la durée de validité des données à usage unique. En effet, pour permettre une utilisation aussi agréable que possible, les données à usage unique ont généralement une durée de vie de l'ordre de la minute. Cela doit en effet permettre à l'utilisateur de prendre possession du deuxième terminal de communication, de la déverrouiller et de prendre connaissance des données à usage unique. Or ce laps de temps peut être mis à profit, par exemple par un attaquant ayant installé un logiciel espion sur le premier terminal de communication, pour intercepter le mot de passe et les données à usage unique et se connecter au système en lieu et place de l'utilisateur légitime. Ce type d'attaque, bien connue, peut être mise en oeuvre par l'intermédiaire d'une redirection dynamique (après saisie de l'identifiant et avant saisie du mot de passe/données à usage unique) vers un site qui imite à la perfection le site du service auquel l'utilisateur tente de se connecter. Ceci pose problème par exemple lorsque le site en question est un site bancaire ou un site contenant des données sensibles.

Un problème incident est lié au fait que l'utilisateur est obligé de saisir des données supplémentaires, Or il est connu que les erreurs résultants de saisies sont fréquentes. En conséquence, avec ce type de système, si l'utilisateur fait une erreur de saisie (par exemple des données à usage uniques), il est obligé de recommencer l'intégralité de la procédure de connexion. Qui plus est, généralement, les données à usage unique sont transmises à l'utilisateur par l'intermédiaire d'un message, de type SMS, ce qui oblige l'utilisateur à fournir, au service en ligne, ses coordonnées téléphonique, chose qu'il n'est pas nécessairement prêt à faire.

Le document US2013185210A1, concerne le remplacement du couple login/mot de passe par un échange cryptographique entre un serveur et un terminal mobile. Le terminal mobile contient une clé *(« Pre-shared secret key »)* et le serveur lui fournit un *« Nonce » (« Number Used Once* ») sous la forme d'un QR-Code. Le Nonce est ensuite combiné à la clé par hachage et le résultat est renvoyé au serveur pour comparaison. *Si la correspondance est correcte, le serveur autorise la connexion.* Le document US2013167208A1 se rapporte à une méthode de récupération d'un login/mot de passe auprès d'un serveur tiers (Service Provider) au moyen d'un QR-Code. Après avoir scanné le QR-Code, le terminal communique un « Device ID » auprès d'un « Service provider » tiers ou éventuellement du serveur web. À partir du Device ID, le « Service Provider » récupère les identifiants de l'utilisateur et les transmet au serveur Web pour autoriser la connexion. Ces documents cependant n'assurent pas que les terminaux d'accès et d'authentification sont autorisés à effectuer les opérations de d'authentification pour sécuriser l'accès au service.

Il existe donc un besoin de fournir une solution de connexion à des services el ligne qui soit plus simple et plus efficace que les solutions présentées précédemment.

### 3. Résumé de l'invention

La technique proposée ne présente pas ces inconvénients de l'art antérieur. Plus particulièrement, la technique proposée met en oeuvre un principe de double authentification, à l'aide de deux terminaux de communication différents. Plus particulièrement l'invention se rapporte à un procédé d'authentification d'un utilisateur, procédé mis en oeuvre lors d'un accès dudit utilisateur à un service en ligne, ledit service en ligne étant accessible auprès d'un serveur, par l'intermédiaire d'un terminal d'accès.

Un tel procédé comprend :
- une étape de diffusion, par le terminal d'accès, d'une première donnée d'authentification ;
- une étape d'obtention, par un terminal d'authentification, de ladite première donnée d'authentification ;
- une étape de connexion par ledit terminal d'authentification, au serveur à une adresse de localisation de ressource issue de ladite première donnée d'authentification ;
- une étape d'obtention, par le serveur, d'au moins une donnée d'identification dudit terminal d'authentification ; et
- lorsque ladite au moins une donnée d'identification dudit terminal d'authentification correspond à une donnée préalablement enregistrée au sein dudit serveur :
   - une étape de transmission, audit terminal d'accès, d'une donnée représentative d'une page de saisie de code d'identification personnel dudit utilisateur ;
   - une étape d'affichage, par ledit terminal d'accès, de ladite page de saisie de code d'identification personel; postérieurement à ladite une étape d'affichage de ladite page de saisie de code d'identification personnel :- une étape de comparaison d'un code d'authentification saisi par ledit utilisateur avec un code d'authentification préalablement enregistré au sein dudit serveur ; et lorsque ledit code d'authentification saisi par utilisateur correspond audit code d'authentification préalablement enregistré au sein dudit serveur :- une étape de comparaison d'une localisation courante dudit terminal d'authentification avec au moins une localisation préalablement autorisée dudit terminal d'authentification ; et- lorsque la localisation courante dudit terminal d'authentification correspond à une localisation préalablement autorisée, une étape de délivrance de ladite première assertion d'authentification audit terminal d'accès.

Ainsi, à la différence du procédé de l'art antérieur, l'utilisateur n'a pas besoin de saisir des données à usage unique. Par ailleurs, le procédé proposé n'est pas sensible aux tentatives de redirection dynamique pas plus qu'aux tentatives d'usurpation. Enfin le procédé proposé ne nécessite pas que l'utilisateur fournisse, au fournisseur de services, des données personnelles complémentaires.

Selon une caractéristique particulière, le procédé comprend en outre, postérieurement à ladite étape d'affichage, une étape de délivrance, audit terminal d'accès, d'une première assertion d'authentification, en fonction d'un code d'authentification personnel saisi par ledit utilisateur.

Ainsi, on réalise une authentification complète tant de l'utilisateur que de son terminal d'authentification.

Selon une caractéristique particulière, préalablement à l'étape de diffusion, le procédé comprend :
- une étape de connexion dudit terminal d'accès à une adresse de localisation de ressource d'accès audit service auprès dudit serveur ;
- une étape de détection, par ledit serveur, d'une nécessité d'authentification ; et
- lorsqu'une nécessité de connexion est détectée, une étape de transmission, audit terminal d'accès, de ladite première donnée d'identification ;

Ainsi, le serveur se sert du terminal d'accès comme d'un vecteur de diffusion d'une information à destination du terminal d'authentification, qui, de par la nature de la diffusion, est proche du terminal d'accès.

Selon une caractéristique particulière, préalablement à ladite étape de transmission de ladite première donnée d'identification, ledit procédé comprend une étape de génération de ladite première donnée d'identification qui comprend :
- une étape de génération d'une adresse de localisation de ressource ;
- une étape d'encodage de l'adresse de localisation de ressource en fonction d'au moins un paramètre d'encodage prédéterminé, délivrant ladite première donnée d'identification.

Ainsi, l'adresse de localisation n'est pas accessible par tout un chacun. Elle est notamment inaccessible à d'éventuels dispositifs de captation frauduleuse d'information.

Selon une caractéristique particulière, l'adresse de localisation de ressource est temporaire.

Ainsi, même en cas de captation frauduleuse, l'adresse de localisation ne peut pas être utilisée plusieurs fois.

Selon une caractéristique particulière, la durée de validité de ladite adresse de localisation de ressource est comprise entre 10 et 20 secondes.

Selon une caractéristique particulière, le procédé comprend en outre, postérieurement à ladite une étape d'affichage de ladite page de saisie de code d'identification personnel :
- une étape de comparaison d'un code d'authentification saisi par ledit utilisateur avec un code d'authentification préalablement enregistré au sein dudit serveur ; et
- lorsque ledit code d'authentification saisi par utilisateur correspond audit code d'authentification préalablement enregistré au sein dudit serveur :
   - une étape de comparaison d'une localisation courante dudit terminal d'authentification avec au moins une localisation préalablement autorisée dudit terminal d'authentification ; et
   - lorsque la localisation courante dudit terminal d'authentification correspond à une localisation préalablement autorisée, une étape de délivrance de ladite première assertion d'authentification audit terminal d'accès.

Ainsi, il n'est pas possible que le terminal d'authentification et le terminal d'accès ne se trouve pas à une localisation prédéfinie et relativement proche l'un de l'autre.

Selon une caractéristique particulière, la première donnée d'authentification se présente sous la forme d'un code-barres en deux dimensions.

Selon une caractéristique particulière l'étape de délivrance de ladite première assertion d'authentification audit terminal d'accès comprend :
- une étape de transmission, audit terminal d'accès d'une structure de donnée de saisie de données de connexion ;
   et en ce que ledit procédé comprend en outre :
   - au moins une étape de vérification, par ledit serveur, qu'une donnée de connexion saisie par ledit utilisateur sur ledit terminal d'accès correspond à une donnée de connexion préalablement enregistrée ; et
   - lorsque ladite donnée de connexion saisie par ledit utilisateur sur ledit terminal d'accès correspond à une donnée de connexion préalablement enregistrée,
      - une étape de délivrance, audit terminal d'accès, d'une deuxième assertion d'authentification.

Selon un autre aspect, la présente technique se rapporte également à un Système configuré pour permettre une authentification d'un utilisateur, système permettant une mise en oeuvre lors d'un accès dudit utilisateur à un service en ligne, ledit service en ligne étant accessible auprès d'un serveur, par l'intermédiaire d'un terminal d'accès. Un tel système comprend :
- des moyens de diffusion, par le terminal d'accès, d'une première donnée d'authentification ;
- des moyens d'obtention, par un terminal d'authentification, de ladite première donnée d'authentification ;
- des moyens de connexion par ledit terminal d'authentification, au serveur à une adresse de localisation de ressource issue de ladite première donnée d'authentification ;
- des moyens d'obtention, par le serveur d'au moins une donnée d'identification dudit terminal d'authentification ; et
- des moyens mis en oeuvre lorsque ladite au moins une donnée d'identification dudit terminal d'authentification correspond à une donnée préalablement enregistrée au sein dudit serveur, comprenant :
   - des moyens de transmission, audit terminal d'accès, d'une donnée représentative d'une page de saisie de code d'identification personnel dudit utilisateur ;
   - des moyens d'affichage, par ledit terminal d'accès, de ladite page de saisie de code d'identification personnel.

Selon un autre aspect, la présente technique se rapporte également à un serveur d'authentification en deux étapes d'un utilisateur.

Selon un autre aspect, la présente technique se rapporte également à un terminal d'authentification comprenant des moyens de mise en oeuvre de la présente technique.

Selon une implémentation préférée, les différentes étapes des procédés selon la technique proposée sont mises en oeuvre par un ou plusieurs logiciels ou programmes d'ordinateur, comprenant des instructions logicielles destinées à être exécutées par un processeur de données d'un module relais selon la technique proposée et étant conçu pour commander l'exécution des différentes étapes des procédés.

En conséquence, la technique proposée vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus ainsi que les différentes caractéristiques qui les constituent, sont combinables entre eux pour la mise en oeuvre de la technique proposée.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente les différentes étapes d'authentification de la technique ;
- La figure 2 présente les étapes préalables à l'authentification selon un mode de réalisation ;
- La figure 3 divulgue un serveur de manière synthétique ;
- La figure 4 divulgue un terminal d'authentification de manière synthétique.

### 5. Description détaillée

### 5.1. Rappel du principe de l'invention.

Comme explicité précédemment, le principe général de l'invention consiste à effectuer une double authentification : une authentification d'un terminal (qui est un terminal de communication de l'utilisateur) avant d'effectuer une identification de l'utilisateur lui-même. Plus particulièrement, à la différence de procédés d'authentification existants, le procédé authentifie un terminal de l'utilisateur. Il ne s'agit pas d'authentifier le terminal avec lequel l'utilisateur tente de se connecter au service (ce terminal est appelé terminal d'accès), mais bien un deuxième terminal, dit terminal d'authentification, dont un des rôles est de prouver que l'utilisateur possède ce terminal et qu'il s'agit bien du terminal nécessaire pour autoriser l'accès au service en ligne.

Comme cela est détaillé infra, le terminal d'authentification ne peut être authentifié qu'uniquement après une phase d'inscription. L'inscription du terminal d'authentification est menée par un procédé d'inscription qui est mis en oeuvre par l'utilisateur lors de sa propre inscription (ou de son propre enregistrement auprès du service en ligne).

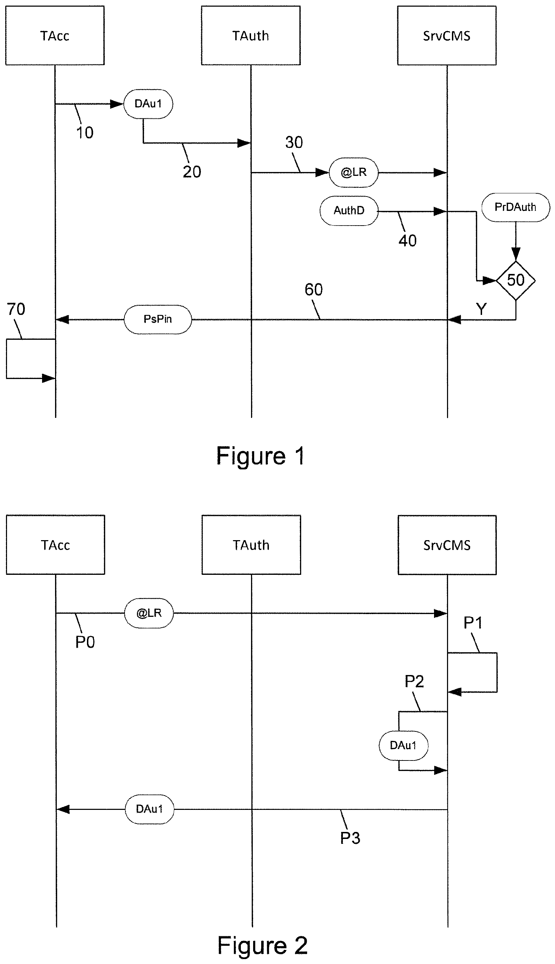

La figure 1 présente, de manière générale, la double authentification au sens de la présente technique. Le procédé comprend :
- une étape de diffusion (10), par le terminal d'accès (TAcc), d'une première donnée d'authentification (DAu1) ;
- une étape d'obtention (20), par un terminal d'authentification (TAuth), de ladite première donnée d'authentification (DAu1) ;
- une étape de connexion (30) par ledit terminal d'authentification (TAuth), au serveur (SrvCMS) à une adresse de localisation de ressource (@LR) issue de ladite première donnée d'authentification (DAu1) ;
- une étape d'obtention (40), par le serveur (SrvCMS), d'au moins une donnée d'identification (AuthD) dudit terminal d'authentification (TAuth) ; et
- lorsque (50) ladite au moins une donnée d'identification (AuthD) dudit terminal d'authentification (TAuth) correspond à une donnée préalablement enregistrée (PrDAuth) au sein dudit serveur (SrvCMS) :
   - une étape de transmission (60), audit terminal d'accès, d'une donnée représentative d'une page de saisie de code d'identification personnel (PsPin) dudit utilisateur ;
   - une étape d'affichage (70), par ledit terminal d'accès, de ladite page de saisie de code d'identification personnel.

Il est intéressant de noter que, selon l'invention, c'est le terminal d'accès (qui peut potentiellement être n'importe quel terminal), qui est utilisé pour débuter l'authentification du terminal d'authentification. À la différence des techniques antérieures, par exemple de la transmission d'un SMS à un deuxième terminal, le service en ligne (et donc le serveur SrvCMS) maîtrise, au travers du terminal d'accès, la localisation du terminal d'authentification. En effet, le fait que le terminal d'authentification doive obtenir une donnée à partir du terminal d'accès implique nécessairement la présence (physique) du terminal d'authentification auprès de l'utilisateur. Il n'est donc pas possible de réaliser un « piratage » distant du terminal d'authentification, car celui-ci est nécessairement en présence du terminal d'accès. Par ailleurs, dans une variante, il est obligatoirement demandé à l'utilisateur du terminal d'authentification de partager ses données de localisation : ceci permet de vérifier que les données de localisation du terminal d'authentification concordent avec les données de localisation du terminal d'accès.

La diffusion, par le terminal d'accès, de la donnée d'authentification peut être réalisée de différentes manières, dont chacune à ses avantages compte tenu de la présente technique. Dans un premier mode de réalisation, la diffusion peut être mise en oeuvre en réalisant un affichage, à l'écran, de la donnée d'authentification, par exemple codée, que seul le terminal d'authentification peut lire (par exemple une donnée affichée à l'écran et captée par une caméra ou un appareil photo du terminal d'authentification). Dans un deuxième mode de réalisation, la diffusion peut être mise en oeuvre sous la forme d'un son comprenant la donnée d'authentification. Dans un troisième mode de réalisation, la donnée d'authentification peut être diffusée sous la forme de données sans fils, de type WiFi ou Bluetooth ou NFC.

Le terminal d'authentification utilise des moyens appropriés (caméra, appareil photo, micro, ressources sans fils), pour obtenir la donnée d'authentification qui lui est destinée. À l'aide d'une application idoine, il décode cette donnée d'authentification et se connecte à une adresse de localisation de ressource (par exemple une URL) fournie par le serveur : la connexion à cette adresse de localisation de ressource permet au serveur d'obtenir des données d'authentification du terminal d'authentification. Il y a plusieurs types de données d'identification : des données qui sont propres au terminal lui-même et des données complémentaires. Les données propres au terminal sont obtenues directement à la connexion par l'intermédiaire de l'application qui se connecte au serveur. L'invention, pour se faire, par exemple, tire avantageusement partie d'une empreinte du terminal d'authentification (par exemple l'empreinte d'un navigateur) et/ou d'un « bearer » accompagnant la requête de connexion au serveur et/ou d'une entête http et/ou d'un ou plusieurs cookies (comprenant une identification unique du terminal d'authentification), présents sur le terminal d'authentification et accompagnant la requête de connexion au serveur. Le serveur compare les données qu'il obtient à des données préenregistrées (par exemple au moment de l'inscription du terminal d'authentification) et lorsque ces données correspondent à celles attendues, il déclenche l'affichage d'une page de connexion, à destination de l'utilisateur, sur le terminal d'accès. Les données complémentaires sont des données qui sont issues d'un dialogue entre le terminal d'authentification et le serveur.

On décrit, en relation avec la figure 2, les étapes préalables à la diffusion selon un mode de réalisation particulier. La méthode comprend :
- une étape de connexion (P0) dudit terminal d'accès (TAcc) à une adresse de localisation de ressource (@LRO) d'accès audit service auprès dudit serveur (SrvCMS) ;
- une étape de détection (P1), par ledit serveur (SrvCMS), d'une nécessité d'authentification ; et
- une étape de génération (P2) de ladite première donnée d'identification (DAu1) qui comprend :
   - une étape de génération d'une adresse de localisation de ressource (@LR) ;
   - une étape d'encodage de l'adresse de localisation de ressource (@LR) en fonction d'au moins un paramètre d'encodage prédéterminé, délivrant ladite première donnée d'identification (DAu1).
- lorsqu'une nécessité de connexion est détectée, une étape de transmission (P3), audit terminal d'accès (TAcc), de ladite première donnée d'identification (DAu1).

Bien entendu, ceci constitue les échanges de base permettant une double authentification. Il est notamment prévu, un mode plus complexe dans lequel les échanges entre le terminal d'authentification et le serveur permettent une authentification plus complète du terminal d'authentification. Ce mode est détaillé par la suite.

### 5.2. Description d'un mode de réalisation

Dans ce mode de réalisation, la donnée d'authentification est affichée, à l'écran par le terminal d'accès. Elle est affichée par exemple sous la forme d'un QR Code ou encore d'une image tatouée. La donnée d'authentification à une durée de vie limitée. Cette durée de vie est cependant moindre que dans le cas de l'art antérieur et ce pour la raison suivante : la donnée d'authentification n'est pas saisie ou utilisée par un humain. Son traitement est réalisé par le terminal d'authentification. Ce traitement est donc nettement plus rapide que ne l'est celui d'un humain. Il n'est donc pas nécessaire que la durée de vie de cette donnée d'authentification soit importante. Cela permet par ailleurs de limiter les risques d'obtention et d'utilisation frauduleuse de cette donnée d'authentification. Ainsi, l'étape de diffusion est une étape d'affichage d'un code QR défini par le serveur. Le terminal d'authentification, par exemple le smartphone de l'utilisateur, est utilisé pour capter ce QR Code.

Dans ce mode de réalisation, deux variantes sont mises en oeuvre :
- la première, non contraignante, consiste à ne pas chiffrer la donnée présente dans le code QR et a permettre à quiconque d'accéder à l'adresse de localisation de ressource contenue dans le code QR ;
- la deuxième, au contraire, se base sur une connaissance, par le terminal d'authentification (smartphone de l'utilisateur) et le serveur, d'une (ou plusieurs) clé(s) de chiffrement et se base sur le chiffrement de cette donnée dans le code QR.

La première variante présente l'avantage de ne pas requérir de connaissance, au préalable, de la part du smartphone. Elle offre néanmoins la possibilité, à un attaquant, de disposer de la donnée d'authentification (l'URL) pour s'y rendre lui-même. Ce désavantage est contrebalancé par la durée de vie relativement courte de la donnée d'authentification, rendant son utilisation par un autre dispositif (celui de l'attaquant) peu aisée voire impossible. La deuxième variante présente l'avantage d'être plus sécurisée, mais nécessite que le terminal d'authentification et le serveur se soient échangés, préalablement, une ou plusieurs clés de chiffrement pour effectuer l'opération de chiffrement/déchiffrement de la donnée d'authentification présente dans le code QR.

Une fois la donnée d'authentification décodée (que ce soit directement à partir du code QR ou par l'intermédiaire d'une opération de chiffrement), le terminal d'authentification se connecte à l'URL (de type https://auth.myserver.com) contenue dans la donnée d'authentification. Cette URL comprend un identifiant et des données complémentaires (optionnelles) en fonction des modes de réalisation. Elle se présente ainsi sous la forme https://auth.myserver.com/?id=XXXXXXXX&comp=YYYYYYYY.

Le terminal d'authentification se connecte à cette URL en transmettant une requête http(s) au serveur, requête qui comprend (notamment), l'empreinte du navigateur (notons que cette empreinte est soit directement déductible de la première requête transmise par le navigateur au serveur, soit elle est issue d'un dialogue entre le navigateur et le serveur).

A réception de cette requête (et/ou de l'empreinte lorsque celle-ci nécessite plusieurs échanges navigateur/serveur), le serveur met (optionnellement) en oeuvre les deux étapes suivantes :
- affichage, sur le terminal d'authentification, d'une page d'authentification ;
- affichage, sur le terminal d'accès, d'un message indiquant qu'une authentification d'un terminal d'authentification est en cours, afin de permettre à l'utilisateur de constater que le processus est en cours.

Sur le terminal d'authentification, l'affichage d'une page d'authentification n'est possible que si le terminal d'authentification a été reconnu (par le serveur), notamment par le biais de son empreinte et/ou des cookies qu'il contient. Lorsque le terminal d'authentification n'est pas reconnu, la page d'authentification est remplacée par une page d'impossibilité d'accès au service.

La page d'authentification, lorsqu'elle est affichée, comprend une zone de saisie d'une donnée d'identification personnelle (à l'utilisateur). Il peut s'agir d'un code pin ou d'un mot de passe. L'utilisateur est alors invité à saisir cette donnée d'identification personnelle sur le terminal d'authentification. Il peut disposer, pour ce faire, d'un nombre d'essais prédéfinis (par exemple trois). Il dispose par ailleurs d'un temps imparti, prédéfini, pour effectuer cette saisie (par exemple trente secondes).

Lorsque la saisie est correcte (c'est-à-dire que le résultat de cette saisie est celui attendu par le serveur dans une réponse (de type POST) faite par le terminal d'authentification, une page de succès est transmis »e par le serveur au terminal d'authentification et le serveur affiche (sur le terminal d'accès), une page de connexion (classique) d'utilisateur. L'utilisateur saisit alors son login/mot de passe pour l'accès au service. La seconde authentification classique par login/mot de passe n'est ainsi rendue possible que par le biais d'un succès de la première authentification (celle du terminal d'authentification). Comme explicité supra, l'affichage d'une page de saisie d'un code d'identification personnel de l'utilisateur est optionnel. La saisie d'un tel code permet d'augmenter la sécurité.

Pour mettre en oeuvre les procédés décrits, le serveur comprend une base de données qui comprend une table d'utilisateurs, listant les utilisateurs (identifiant, mots de passe, adresses de courrier électronique). Cette base de données comprend également une table des terminaux d'authentification, listant les terminaux d'authentification. Les attributs de cette tables comprennent notamment l'empreinte du terminal, calculée lors de l'enregistrement du terminal au système. Cette empreinte est unique et est utilisée en tant qu'identifiant du terminal d'authentification. Lorsque l'empreinte change, le terminal d'authentification n'est plus reconnu et est donc tacitement révoqué. Pour que le terminal soit à nouveau reconnu, un enregistrement de celui-ci doit être effectué. La table des terminaux d'authentification comprend d'autres champs, qui sont détaillés infra, en lien avec la description des processus d'enregistrement, de révocation, de création des cookies. La base comprend également une table permettant de tracer les associations entre les utilisateurs et les terminaux d'authentification.

Les données de localisation quant à elles, comprennent des données obtenues grâce à l'adresse IP des différents dispositifs (terminal d'accès, terminal d'authentification) : en fonction des modes de réalisation, ces données peuvent être obtenues, par le serveur postérieurement à l'obtention des adresses IP, par l'intermédiaire d'une requête d'interrogation à un service de localisation d'adresses IP. Le serveur (ou l'utilisateur) peut définir une localisation autorisée (de référence) plus ou moins large et cette localisation peut être utilisée pour accepter (ou non) une authentification à partir du terminal d'authentification. De plus, lorsque le terminal d'authentification dispose d'un processeur d'obtention de données de localisation (GPS, Glonass, etc.) ces données sont fournies par le terminal d'authentification au serveur, qui les utilisent pour autoriser ou non une connexion. Ces données prennent la forme de coordonnées de type longitude/latitude.

Les avantages apportés par ce système sont nombreux. Il permet notamment de se passer d'architectures de sécurisation complexes tout en apportant un haut niveau de sécurité. Il est simple à implémenter et ne nécessite pas d'application spécifique à installer sur le terminal d'authentification. Une application spécifique peut toutefois être installée, pour des besoins de persistance de données, par exemple, mais même ce type d'application est simple à construire et à maintenir.

### 5.3. Autres caractéristiques et avantages

Le procédé de double authentification précédemment présenté peut avantageusement être couplé à un ensemble de procédés optionnels d'enregistrement (de terminal d'authentification, d'utilisateur), de révocation (de terminal d'authentification, d'utilisateur, de terminal d'accès) et de génération de données d'authentification. Ces différents procédés sont présentés ci-après.

### 5.3.1. Processus d'enregistrement pour le premier utilisateur

Le processus d'enregistrement est déclenché automatiquement pour un terminal non reconnu du système (pas de cookie, pas d'empreinte d'authentification connue) :
[1] accès à la page de connexion qui présente le code QR à usage unique et durée de vie limitée ;
[2] scan par un terminal mobile qui n'a encore jamais été enregistré. Le scan du QR Code déclenche l'appel de l'URL ce qui a pour conséquence de :
   a. informer l'utilisateur que son terminal n'est pas encore connu ;
   b. demander son accord pour les étapes c et d (sinon échec de l'enregistrement) ;
   c. déposer un cookie (sur le terminal d'authentifications) qui sera conservé ;
   d. géolocaliser le terminal et conserver une trace de cette position ;
   e. générer une signature d'authentification javascript qui est conservée pour authentifier le terminal.
[3] affichage d'un formulaire demandant à l'utilisateur de saisir son adresse de courrier électronique d'utilisateur ce qui a pour conséquence de :
   a. transmettre un courrier électronique à cette adresse avec un lien d'activation qui devra obligatoirement être ouvert depuis le même terminal (même cookie, même localisation, même signature) ;
   b. éventuellement doublé sur une seconde adresse courrier électronique ou un SMS pour les cas où la sécurité est plus sensible ;
   c. construire, au sein du serveur, une association entre le terminal d'authentification et l'utilisateur; ce terminal ne pourra donc pas être utilisé pour un autre utilisateur sauf si le processus d'enregistrement est répété pour un nouvel utilisateur supplémentaire.
[4] à l'issue de l'étape [3], un code personnel d'identification peut optionnellement être configuré par l'utilisateur. Ce code personnel d'identification est propre au terminal et sera demandé par la suite lors de chaque authentification.

### 5.3.2. Processus d'enregistrement pour un utilisateur supplémentaire

Si le terminal a déjà été enregistré pour un premier utilisateur, le code QR permet d'accéder à la page de connexion et d'entrer une autre combinaison login/mot de passe, ce qui n'est pas accepté par le système.

Lorsque ce cas inhabituel se présente, et seulement si la combinaison login/mot de passe est correctement entrée pour le nouvel utilisateur, la page d'enregistrement est proposée pour effectuer une nouvelle association utilisateur au terminal d'authentification (i.e. transmission d'un courrier électronique à l'adresse du nouvel utilisateur avec un lien d'enregistrement).

### 5.3.3. Échec de l'enregistrement

L'enregistrement peut échouer dans les cas suivants, qui sont représentatifs des mesures de sécurité apportées par le système :
- le lien de validation transmis par courrier électronique n'a pas été appelé dans le délai imparti depuis le terminal d'authentification ;
- le SMS n'a pas été confirmé dans le délai imparti ;
- l'utilisateur refuse de partager sa position ;
- l'enregistrement précédent a échoué (sauf dans les 3 cas ci-dessus) ;
- le terminal a déjà été enregistré puis révoqué par sécurité (même cookie / empreinte / adresse IP) ;
- la localisation géographique est incohérente avec les autorisations du système ;
- le terminal est « rooté » alors que ce n'est pas autorisé par le système ;
- la position GPS est incohérente par rapport à l'adresse IP du terminal ;
- l'adresse IP autorisée pour le terminal n'est pas privée alors que c'est imposé ;
- l'adresse IP est en liste noire à la suite d'une révocation précédente depuis cette adresse ; il est éventuellement possible de combiner l'adresse IP avec la signature et la valeur du cookie, pour plus de précision et de sécurité.

Un échec d'enregistrement fait l'objet d'une entrée dans le journal et éventuellement d'un courrier électronique.

### 5.3.4. Révocation d'un terminal d'authentification

Un terminal déjà enregistré peut être révoqué automatiquement lorsqu'un comportement supposé frauduleux est détecté :
- mauvais code personnel d'identification composé plusieurs fois après scan du code QR (par exemple trois fois) ;
- incohérence géographique du terminal d'authentification avec la position du terminal d'accès ;
- incohérence géographique du terminal d'authentification avec des zones autorisées pour la consultation (zones géographique obtenue par l'intermédiaire d'une localisation de l'adresse IP) ;
- terminal soudainement « rooté » alors qu'il ne l'était pas avant ;
- nombre de lectures de code QR supérieure à un seuil défini (par exemple trois fois) ;
- partie variable incorrecte dans le cookie ;
- plusieurs tentatives d'enregistrement du terminal pour un nouvel utilisateur sans connaître le couple login/mot de passe (par exemple trois).

Un terminal peut également être révoqué manuellement par un administrateur autorisé. La révocation d'un terminal fait l'objet d'une alerte par courrier électronique et d'un ajout d'une entrée dans le journal. L'utilisateur du terminal est informé que son terminal est révoqué et qu'il ne lui est pas possible d'enregistrer un nouveau terminal lors du scan code QR suivant.

### 5.3.5. Enregistrement d'un terminal d'accès

L'enregistrement d'un terminal d'accès est transparent pour l'utilisateur et suppose simplement qu'un cookie soit déposé pour une (éventuelle) reconnaissance ultérieure et que l'utilisateur accepte de partager sa position.

Une empreinte est générée et conservée mais elle ne peut, a priori, pas être utilisée pour identifier avec certitude un terminal. Ceci est logique puisque le terminal d'accès peut être un terminal situé dans un lieu public (bibliothèque, cybercafé, etc.).

Il n'existe pas de cas d'échec à l'enregistrement d'un terminal d'accès. Ceci est inutile car seul le terminal d'authentification permet l'accéder à la page de connexion à partir d'un terminal d'accès (même inconnu).

### 5.3.6. Révocation d'un terminal d'accès

Un terminal d'accès déjà enregistré peut être révoqué automatiquement par suite d'actions supposées frauduleuses depuis le terminal d'authentification lorsqu'un comportement supposé frauduleux est détecté depuis ce dernier. Les actions sont les mêmes que celles qui conduisent à la révocation du terminal d'authentification.

### 5.3.7. Association utilisateur - terminal d'authentification

Le système permet de conserver une association de type n-n entre des utilisateurs et un ou plusieurs terminaux d'authentification et de consultation. Par conséquent :
- un utilisateur peut avoir plusieurs terminaux d'authentification et de consultation ;
- plusieurs utilisateurs peuvent de connecter au moyen des mêmes terminaux d'authentification et de consultation.

Cette association n'est pas destinée à permettre une connexion de l'utilisateur mais à contrôler que le terminal est bien autorisé à donner un accès à la page de connexion de l'utilisateur. Un autre utilisateur ne pourra pas se connecter à partir de ce terminal, sauf s'il effectue une nouvelle démarche d'enregistrement de celui-ci.

L'association est aussi mise en oeuvre pour effectuer la traçabilité des terminaux et de leurs utilisateurs lors des demandes de connexion. Elle permet ensuite de gérer les alertes et éventuellement la révocation des autres terminaux et la désactivation de comptes utilisateurs.

### 5.3.8. Mise en sécurité d'un compte utilisateur

Par mesure de sécurité, le système peut éventuellement désactiver un compte utilisateur ayant été associé à un terminal qui vient d'être révoqué. La réactivation peut ensuite être effectuée par un administrateur.

### 5.3.9. Génération du cookie

Chaque terminal d'authentification et de consultation reçoit un cookie dont la valeur est renouvelée à chaque visite. Le contenu du cookie est décomposé en :
- une partie fixe et unique par terminal (hash de l'empreinte combinée à un horodatage) ;
- une partie variable recalculée à chaque visite (hash d'un horodatage).

À chaque visite la partie variable est recalculée et conservée dans la base du serveur pour comparaison ultérieure.

Dans le cas d'un vol de cookie, la partie variable permet d'identifier une erreur de séquence et la partie fixe permet de retrouver le terminal et de procéder aux révocations.

### 5.4. Dispositifs de mise en oeuvre

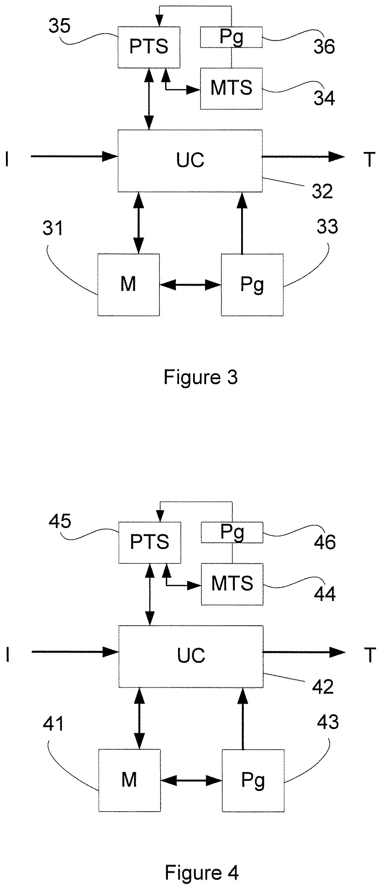

On décrit, en relation avec la figure 3, un serveur (SrvCMS) mis en oeuvre pour gérer, en deux temps, l'authentification d'un utilisateur à un service en utilisant un terminal d'accès et un terminal d'authentification, selon le procédé décrit préalablement.

Par exemple, le serveur (SrvCMS) comprend une mémoire 31 comprenant par exemple une mémoire tampon, un processeur de traitement général 32, équipée par exemple d'un microprocesseur, et pilotée par un programme d'ordinateur 33, et/ou une mémoire sécurisée 34, un processeur de traitement sécurisé 35, pilotée par un programme d'ordinateur 36, ces unités de traitement mettant en oeuvre des procédés de traitement de données tels que décrits précédemment pour effectuer des traitements d'authentification, traitement d'authentification qui sont paramétrés en fonction de la présence (ou non) d'une donnée d'authentification de référence, au sein du serveur, donnée qui sert à la comparaison avec une donnée d'authentification courante issue du terminal d'authentification.

À l'initialisation, les instructions de code du programme d'ordinateur 36 sont par exemple chargées dans une mémoire avant d'être exécutées par le processeur de traitement sécurisé 35. Le processeur de traitement 35 reçoit en entrée au moins une donnée représentative d'une requête de connexion au service. Le processeur de traitement sécurisé 35 met en oeuvre les étapes du procédé d'authentification, selon les instructions du programme d'ordinateur 36 pour obtenir une donnée d'authentification du terminal et une donnée d'authentification de référence à comparer.

Pour cela, le serveur (SrvCMS) comprend, outre la mémoire 34, des moyens de communications, tels que des modules de communication réseau, des moyens de transmission de données et des circuits de transmission de données entre les divers composants du serveur.

Les moyens précédemment décrits peuvent se présenter sous la forme d'un processeur particulier implémenté au sein d'un dispositif spécifique implanté au sein du serveur. Selon un mode de réalisation particulier, le serveur (SrvCMS) met en oeuvre une application particulière qui est en charge de la réalisation des opérations précédemment décrites, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

On décrit, en relation avec la figure 4, un terminal d'authentification (TAuth) mis en oeuvre pour gérer, en deux temps, l'authentification d'un utilisateur à un service en utilisant un terminal d'accès et un serveur (SrvCMS), selon le procédé décrit préalablement.

Par exemple, le terminal d'authentification (TAuth) comprend une mémoire 41 comprenant par exemple une mémoire tampon, un processeur de traitement général 42, équipée par exemple d'un microprocesseur, et pilotée par un programme d'ordinateur 43, et/ou une mémoire sécurisée 44, un processeur de traitement sécurisé 45, pilotée par un programme d'ordinateur 46, ces unités de traitement mettant en oeuvre des procédés de traitement de données tels que décrits précédemment pour effectuer des traitements d'authentification, traitement d'authentification qui sont paramétrés en fonction de la présence (ou non) d'une donnée d'authentification de référence, au sein du terminal d'authentification, donnée qui sert à la comparaison avec une donnée d'authentification de référence préalablement obtenue et accessible à partir du serveur.

À l'initialisation, les instructions de code du programme d'ordinateur 46 sont par exemple chargées dans une mémoire avant d'être exécutées par le processeur de traitement sécurisé 45. Le processeur de traitement 45 reçoit en entrée au moins une donnée représentative d'une requête de connexion au service. Le processeur de traitement sécurisé 45 met en oeuvre les étapes du procédé d'authentification, selon les instructions du programme d'ordinateur 46 pour obtenir une donnée d'authentification du terminal et une donnée d'authentification de référence à comparer.

Pour cela, le terminal d'authentification (TAuth) comprend, outre la mémoire 44, des moyens de communications, tels que des modules de communication réseau, des moyens de transmission de données et des circuits de transmission de données entre les divers composants du serveur.

Les moyens précédemment décrits peuvent se présenter sous la forme d'un processeur particulier implémenté au sein d'un dispositif spécifique implanté au sein du terminal d'authentification. Selon un mode de réalisation particulier, le terminal d'authentification (TAuth) met en oeuvre une application particulière qui est en charge de la réalisation des opérations précédemment décrites, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

## Revendications

1. Procédé d'authentification d'un utilisateur, procédé mis en oeuvre lors d'un accès dudit utilisateur à un service en ligne, ledit service en ligne étant accessible auprès d'un serveur (SrvCMS), par l'intermédiaire d'un terminal d'accès (TAcc), procédé comprenant :
- une étape de diffusion (10), par le terminal d'accès (TAcc), d'une première donnée d'authentification (DAu1) ;
- une étape d'obtention (20), par un terminal d'authentification (TAuth), de ladite première donnée d'authentification (DAu1) ;
- une étape de connexion (30) par ledit terminal d'authentification (TAuth), au serveur (SrvCMS) à une adresse de localisation de ressource (@LR) issue de ladite première donnée d'authentification (DAu1) ;
- une étape d'obtention (40), par le serveur (SrvCMS), d'au moins une donnée d'identification (AuthD) dudit terminal d'authentification (TAuth) ; et
- lorsque ladite au moins une donnée d'identification (AuthD) dudit terminal d'authentification (TAuth) correspond à une donnée préalablement enregistrée (PrDAuth) au sein dudit serveur (SrvCMS) :
- une étape de transmission (60), audit terminal d'accès, d'une donnée représentative d'une page de saisie de code d'identification personnel dudit utilisateur ;
- une étape d'affichage (70), par ledit terminal d'accès, de ladite page de saisie de code d'identification personnel ; postérieurement à ladite une étape d'affichage (70) de ladite page de saisie de code d'identification personnel :
- une étape de comparaison d'un code d'authentification (PIN) saisi par ledit utilisateur avec un code d'authentification préalablement enregistré au sein dudit serveur ; et lorsque ledit code d'authentification (PIN) saisi par utilisateur correspond audit code d'authentification préalablement enregistré au sein dudit serveur :
- une étape de comparaison d'une localisation courante dudit terminal d'authentification (TAuth) avec au moins une localisation préalablement autorisée dudit terminal d'authentification ; et
- lorsque la localisation courante dudit terminal d'authentification (TAuth) correspond à une localisation préalablement autorisée, une étape de délivrance de ladite première assertion d'authentification audit terminal d'accès.

2. Procédé d'authentification selon la revendication 1, **caractérisé en ce qu'**il comprend en outre, postérieurement à ladite étape d'affichage, une étape de délivrance, audit terminal d'accès, d'une première assertion d'authentification, en fonction d'un code d'authentification personnel saisi par ledit utilisateur.

3. Procédé d'authentification selon la revendication 1, **caractérisé en ce que**, préalablement à l'étape de diffusion (10), comprend :
- une étape de connexion (P0) dudit terminal d'accès (TAcc) à une adresse de localisation de ressource (@LRO) d'accès audit service auprès dudit serveur (SrvCMS) ;
- une étape de détection (P1), par ledit serveur (SrvCMS), d'une nécessité d'authentification ; et
- lorsqu'une nécessité de connexion est détectée, une étape de transmission (P3), audit terminal d'accès (TAcc), de ladite première donnée d'identification (DAu1) ;

4. Procédé d'authentification selon la revendication 3, **caractérisé en ce que**, préalablement à ladite étape de transmission (P3) de ladite première donnée d'identification (DAu1), ledit procédé comprend une étape de génération (P2) de ladite première donnée d'identification (DAu1) qui comprend :
- une étape de génération d'une adresse de localisation de ressource (@LR) ;
- une étape d'encodage de l'adresse de localisation de ressource (@LR) en fonction d'au moins un paramètre d'encodage prédéterminé, délivrant ladite première donnée d'identification (DAu1).

5. Procédé d'authentification selon la revendication 1, **caractérisé en ce que** l'adresse de localisation de ressource (@LR) est temporaire.

6. Procédé d'authentification selon la revendication 5, **caractérisé en ce que** la durée de validité de ladite adresse de localisation de ressource (@LR) est comprise entre 10 et 20 secondes.

7. Procédé d'authentification selon la revendication 1, **caractérisé en ce que** ladite première donnée d'authentification se présente sous la forme d'un code-barres en deux dimensions.

8. Procédé d'authentification selon la revendication 2, **caractérisé en ce que** ladite étape de délivrance de ladite première assertion d'authentification audit terminal d'accès comprend :
- une étape de transmission, audit terminal d'accès d'une structure de donnée de saisie de données de connexion ;
et **en ce que** ledit procédé comprend en outre :
- au moins une étape de vérification, par ledit serveur, qu'une donnée de connexion saisie par ledit utilisateur sur ledit terminal d'accès correspond à une donnée de connexion préalablement enregistrée ; et
lorsque ladite donnée de connexion saisie par ledit utilisateur sur ledit terminal d'accès correspond à une donnée de connexion préalablement enregistrée,
- une étape de délivrance, audit terminal d'accès, d'une deuxième assertion d'authentification.

9. Système configuré pour permettre une authentification d'un utilisateur, procédé mis en oeuvre lors d'un accès dudit utilisateur à un service en ligne, ledit service en ligne étant accessible auprès d'un serveur (SrvCMS), par l'intermédiaire d'un terminal d'accès (TAcc), système comprenant :
- des moyens de diffusion (10), par le terminal d'accès (TAcc), d'une première donnée d'authentification (DAu1) ;
- des moyens d'obtention (20), par un terminal d'authentification (TAuth), de ladite première donnée d'authentification (DAu1) ;
- des moyens de connexion (30) par ledit terminal d'authentification (TAuth), au serveur (SrvCMS) à une adresse de localisation de ressource (@LR) issue de ladite première donnée d'authentification (DAu1) ;
- des moyens d'obtention (40), par le serveur (SrvCMS), d'au moins une donnée d'identification (AuthD) dudit terminal d'authentification (TAuth) ; et
- des moyens mis en oeuvre lorsque ladite au moins une donnée d'identification (AuthD) dudit terminal d'authentification (TAuth) correspond à une donnée préalablement enregistrée (PrDAuth) au sein dudit serveur (SrvCMS), comprenant :
- des moyens de transmission (60), audit terminal d'accès, d'une donnée représentative d'une page de saisie de code d'identification personnel dudit utilisateur ;
- des moyens d'affichage (70), par ledit terminal d'accès, de ladite page de saisie de code d'identification personnel ;
- des moyens de comparaison d'un code d'authentification (PIN) saisi par ledit utilisateur avec un code d'authentification préalablement enregistré au sein dudit serveur ; et
lorsque ledit code d'authentification (PIN) saisi par utilisateur correspond audit code d'authentification préalablement enregistré au sein dudit serveur :
- des moyens de mise en oeuvre d'une comparaison d'une localisation courante dudit terminal d'authentification (TAuth) avec au moins une localisation préalablement autorisée dudit terminal d'authentification ; et
- lorsque la localisation courante dudit terminal d'authentification (TAuth) correspond à une localisation préalablement autorisée, des moyens de délivrance de ladite première assertion d'authentification audit terminal d'accès.

10. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé selon la revendication 1, lorsqu'il est exécuté sur un ordinateur.

## Patentansprüche

1. Verfahren zur Authentifizierung eines Nutzers, wobei das Verfahren bei einem Zugriff des Nutzers auf einen Online-Dienst durchgeführt wird, wobei auf den Online-Dienst über einen Server (SrvCMS) mittels eines Zugriffsendgeräts (TAcc) zugegriffen werden kann, wobei das Verfahren umfasst:
- einen Schritt des Verbreitens (10) eines ersten Authentifizierungsdatenelements (DAu1) durch das Zugriffsendgerät (TAcc);
- einen Schritt des Erhaltens (20) des ersten Authentifizierungsdatenelements (DAu1) durch ein Authentifizierungsendgerät (TAuth);
- einen Schritt des Verbindens (30) mit dem Server (SrvCMS) an einer von dem ersten Authentifizierungsdatenelement (DAu1) abgeleiteten Ressourcenortadresse (@LR) durch das Authentifizierungsendgerät (TAuth);
- einen Schritt des Erhaltens (40) wenigstens eines Identifikationsdatenelements (AuthD) des Authentifizierungsendgeräts (TAuth) durch den Server (SrvCMS); und
- wenn das wenigstens eine Identifikationsdatenelement (AuthD) des Authentifizierungsendgeräts (TAuth) einem zuvor auf dem Server (SrvCMS) gespeicherten Datenelement (PrDAuth) entspricht:
- einen Schritt des Sendens (60) eines Datenelements, das eine Seite zur Eingabe des persönlichen Identifikationscodes eines Nutzers repräsentiert, an das Zugriffsendgerät;
- einen Schritt des Anzeigens (70) der Seite zur Eingabe des persönlichen Identifikationscodes durch das Zugriffsendgerät;
nach dem Schritt des Anzeigens (70) der Seite zur Eingabe des persönlichen Identifikationscodes:
- einen Schritt des Vergleichens eines durch den Nutzer eingegebenen Authentifizierungscodes (PIN) mit einem zuvor auf dem Server gespeicherten Authentifizierungscode; und
wenn der durch den Nutzer eingegebene Authentifizierungscode (PIN) dem zuvor auf dem Server gespeicherten Authentifizierungscode entspricht:
- einen Schritt des Vergleichens eines aktuellen Standorts des Authentifizierungsendgeräts (TAuth) mit wenigstens einem zuvor autorisierten Standort des Authentifizierungsendgeräts; und
- wenn der aktuelle Standort des Authentifizierungsendgeräts (TAuth) einem zuvor autorisierten Standort entspricht, einen Schritt des Übergebens der ersten Authentifizierungsaussage an das Zugriffsendgerät.

2. Verfahren zur Authentifizierung nach Anspruch 1, **dadurch gekennzeichnet, dass** es zudem, nach dem Schritt des Anzeigens, einen Schritt des Übergebens einer ersten Authentifizierungsaussage an das Zugriffsendgerät in Abhängigkeit von einem durch den Nutzer eingegebenen persönlichen Authentifizierungscode umfasst.

3. Verfahren zur Authentifizierung nach Anspruch 1, **dadurch gekennzeichnet, dass** es, vor dem Schritt des Verbreitens (10), umfasst:
- einen Schritt des Verbindens (P0) des Zugriffsendgeräts (TAcc) mit einer Ressourcenortadresse (@LRO) für den Zugriff auf den Dienst über den Server (SrvCMS);
- einen Schritt des Erkennens (P1) einer Notwendigkeit einer Authentifizierung durch den Server (SrvCMS); und
- wenn eine Verbindungsnotwendigkeit erkannt wird, einen Schritt des Sendens (P3) des ersten Identifikationsdatenelements (DAu1) an das Zugriffsendgerät (TAcc).

4. Verfahren zur Authentifizierung nach Anspruch 3, **dadurch gekennzeichnet, dass**, vor dem Schritt des Sendens (P3) des ersten Identifikationsdatenelements (DAu1), das Verfahren einen Schritt des Erzeugens (P2) des ersten Identifikationsdatenelements (DAu1) umfasst, welcher umfasst:
- einen Schritt des Erzeugens einer Adresse eines Ressourcenorts (@LR);
- einen Schritt des Codierens der Adresse des Ressourcenorts (@LR) in Abhängigkeit von wenigstens einem vorbestimmten Codierungsparameter, wodurch das erste Identifikationsdatenelement (DAu1) übergeben wird.

5. Verfahren zur Authentifizierung nach Anspruch 1, **dadurch gekennzeichnet, dass** die Adresse des Ressourcenorts (@LR) temporär ist.

6. Verfahren zur Authentifizierung nach Anspruch 5, **dadurch gekennzeichnet, dass** die Gültigkeitsdauer der Adresse des Ressourcenorts (@LR) zwischen 10 und 20 Sekunden liegt.

7. Verfahren zur Authentifizierung nach Anspruch 1, **dadurch gekennzeichnet, dass** das erste Authentifizierungsdatenelement in Form eines Strichcodes in zwei Dimensionen dargestellt ist.

8. Verfahren zur Authentifizierung nach Anspruch 2, **dadurch gekennzeichnet, dass** der Schritt des Übergebens der ersten Authentifizierungsaussage an das Zugriffsendgerät umfasst:
- einen Schritt des Sendens einer Dateneingabestruktur von Verbindungsdaten an das Zugriffsendgerät;
und dadurch, dass das Verfahren zudem umfasst:
- wenigstens einen Schritt des Verifizierens, ob ein durch den Nutzer über das Zugriffsendgerät eingegebenes Verbindungsdatenelement einem zuvor gespeicherten Verbindungsdatenelement entspricht, durch den Server; und
- wenn das durch den Nutzer über das Zugriffsendgerät eingegebenes Verbindungsdatenelement einem zuvor gespeicherten Datenelement entspricht,
- einen Schritt des Übergebens einer zweiten Authentifizierungsaussage an das Zugriffsendgerät.

9. System, das eingerichtet ist, eine Authentifizierung durch einen Nutzer zu ermöglichen, wobei das Verfahren bei einem Zugriff des Nutzers auf einen Online-Dienst durchgeführt wird, wobei auf den Online-Dienst über einen Server (SrvCMS) mittels eines Zugriffsendgeräts (TAcc) zugegriffen werden kann, wobei das System aufweist:
- Mittel zum Verbreiten (10) eines ersten Authentifizierungsdatenelements (DAu1) durch das Zugriffsendgerät (TAcc);
- Mittel zum Erhalten (20) des ersten Authentifizierungsdatenelements (DAu1) durch ein Authentifizierungsendgerät (TAuth);
- Mittel zum Verbinden (30) mit dem Server (SrvCMS) an einer von dem ersten Authentifizierungsdatenelement (DAu1) abgeleiteten Ressourcenortadresse (@LR) durch das Authentifizierungsendgerät (TAuth);
- Mittel zum Erhalten (40) wenigstens eines ersten Identifikationsdatenelements (AuthD) des Authentifizierungsendgeräts (TAuth) durch den Server (SrvCMS); und
- Mittel, die eingesetzt werden, wenn das wenigstens eine Identifikationsdatenelement (AuthD) des Authentifizierungsendgeräts (TAuth) einem zuvor auf dem Server (SrvCMS) gespeicherten Datenelement entspricht, aufweisend:
- Mittel zum Senden (60) eines Datenelements, das eine Seite zur Eingabe eines persönlichen Identifikationscodes durch den Nutzer repräsentiert, an das Zugriffsendgerät;
- Mittel zum Anzeigen (70) der Seite zur Eingabe des persönlichen Identifikationscodes durch das Zugriffsendgerät;
- Mittel zum Vergleichen eines durch den Nutzer eingegebenen Authentifizierungscodes (PIN) mit einem zuvor auf dem Server gespeicherten Authentifizierungscode; und
wenn der durch den Nutzer eingegebene Authentifizierungscode (PIN) dem zuvor auf dem Server gespeicherten Authentifizierungscode entspricht:
- Mittel zum Durchführen eines Vergleichs eines aktuellen Standorts des Authentifizierungsendgeräts (TAuth) mit wenigstens einem zuvor autorisierten Standort des Authentifizierungsendgeräts; und
- wenn der aktuelle Standort des Authentifizierungsendgeräts (TAuth) einem zuvor autorisierten Standort entspricht, Mittel zum Übergeben der ersten Authentifizierungsaussage an das Zugriffsendgerät.

10. Computerprogrammprodukt, das aus einem Kommunikationsnetz ladbar und/oder auf einem computerlesbaren Träger gespeichert und/oder durch einen Mikroprozessor ausführbar ist, **dadurch gekennzeichnet, dass** es Programmcodeanweisungen zum Ausführen eines Verfahrens nach Anspruch 1 aufweist, wenn es auf einem Computer ausgeführt wird.

## Claims

1. Method of authentication of a user, a method implemented when said user accesses an online service, said online service being accessible in a server (SrvCMS) through an access terminal (TAcc), method comprising:
- a step of dissemination (10), by the access terminal (TAcc), of a first piece of authentication data (DAu1) ;
- a step of obtaining (20) by an authentication terminal (TAuth), of said first piece of authentication data (DAu1);
- a step of connection (30), by said authentication terminal (TAuth), to the server (SrvCMS) at a resource-location address (@LR) derived from said first piece of authentication data (DAu1);
- a step of obtaining (40), by the server (SrvCMS), of at least one piece of identification data (AuthD) for identifying said authentication terminal (TAuth); and
- when said at least one piece of identification data (AuthD) for identifying said authentication terminal (TAuth) corresponds to piece of data pre-recorded (PrDAuth) in said server (SrvCMS) :
- a step of transmission (60), to said access terminal, of a piece of data representing a page for entering a personal identification code of said user;
- a step of display (70), by said access terminal, of said page for entering a personal identification code;
subsequently to said step of display (70) of said page for entering a personal identification code:
- a step for comparing an authentication code (PIN) entered by said user with an authentication code pre-recorded within said server; and
when said authentication code (PIN) entered by the user corresponds to said authentication code pre-recorded in said server:
- a step of comparison of a current location of said authentication terminal (TAuth) with at least one pre-authorized location of said authentication terminal; and
- when the current location of said authentication terminal (TAuth) corresponds to a pre-authorized location, a step for issuing said first assertion of authentication to said access terminal.

2. Method of authentication according to claim 1, **characterized in that** it further comprises, subsequently to said display step, a step for issuing, to said access terminal, a first assertion of authentication as a function of a personal authentication code entered by said user.

3. Method of authentication according to claim 1 **characterized in that**, prior to the dissemination step (10), it comprises:
- a step of connection (P0) of said access terminal (TAcc) to a resource-location address (@LRO) for access to said service with said server (SrvCMS);
- a step of detection (P1), by said server (SrvCMS, of a need for authentication; and
- when the need for connection is detected, a step of transmission (P3), to said access terminal (TAcc), of said first piece of identification data (DAu1);

4. Method of authentication according to claim 3 **characterized in that**, prior to said step of transmission (P3) of said first piece of identification data (DAu1), said method comprises a step for generating (P2) said first piece of identification data (DAu1) that comprises:
- a step for generating a resource-location address (@LR);
- a step for encoding the resource-location address (@LRO) as a function of at least one pre-determined encoding parameter issuing said first piece of identification data (DAu1).

5. Method of authentication according to claim 1, **characterized in that** the resource-location address (@LRO) is temporary.

6. Method of authentication according to claim 5, **characterized in that** the duration of validity of said resource-location address (@LRO) is from 10 to 20 seconds.

7. Method of authentication according to claim 1, **characterized in that** said first piece of authentication data takes the form of a 2D bar code.

8. Method of authentication according to claim 2, **characterized in that** said step for issuing said first assertion of authentication to said access terminal comprises:
- a step of transmission, to said access terminal, of a data structure for the entry of connection data;
and **in that** said method further comprises:
- at least one step of verification, by said server, that a piece of connection data entered by said user on said access terminal corresponds to a piece of pre-recorded connection data; and
when said piece of connection data entered by said user on said access terminal corresponds to a pre-recorded piece of connection data:
- a step for issuing a second assertion of authentication to said access terminal.

9. System configured to enable an authentication of a user, a system enabling an implementation during an access of said user to an online service, said online service being accessible through a server (SrvCMS), by means of an access terminal (TAcc), a system comprising:
- means of dissemination (10), by the access terminal (TAcc), of a first piece of authentication data (Dau1);
- means for the obtaining (20), by an authentication terminal (Tauth), of said first piece of authentication data (Dau1);
- means of connection (30), by said authentication terminal (Tauth), to the server (SrvCMS) at a resource-location address (@LRO) derived from said first piece of authentication data (Dau1);
- means for the obtaining (40), by the server (SrvCMS), of at least one piece of identification data (AuthD) for identifying said authentication terminal (Tauth); and
- means implemented when said at least one piece of identification data (AuthD) for identifying said authentication terminal (Tauth) corresponds to a piece of data pre-recorded (PrDAuth) in said server (SrvCMS), comprising:
- means of transmission (60), to said access terminal, of a piece of data representing a page for entry of a personal identification code of said user;
- means of display (70), by said access terminal, of said page for entry of a personal identification code
- means of comparison of an authentication code (PIN) entered by said user with an authentication code pre-recorded within said server; and
when said authentication code (PIN) entered by the user corresponds to said authentication code pre-recorded in said server:
- means for implementing a comparison of a current location of said authentication terminal (TAuth) with at least one pre-authorized location of said authentication terminal; and
- when the current location of said authentication terminal (TAuth) corresponds to a pre-authorized location, means for issuing said first assertion of authentication to said access terminal.

10. Computer program product downloadable from a communication network and/or stored on a computer-readable medium and/or executable by a microprocessor, **characterized in that** it comprises code instructions of program code instructions for executing a method according to claim 1, when executed on a computer.
